# EUROPEAN PATENT APPLICATION

(11) **EP 4 759 602 A1**
(43) Date of publication of application: **17.06.2026**
(21) Application number: 25219784.3
(22) Date of filing: 01.12.2025
(51) Int. Cl.: B60K 35/21, B60K 35/22, B60K 35/23, B60K 35/81, B60K 37/20

(54) **DISPLAY CONTROL DEVICE**

(30) Priority: 10.12.2024 JP 2024215964
(71) Applicant: Toyota Jidosha Kabushiki Kaisha, Toyota-shi, Aichi-ken 471-8571 (JP)
(72) Inventor: KUMON, Hitoshi, Toyota-shi, 471-8571 (JP); NADAYA, Yasuaki, Toyota-shi, 471-8571 (JP); YATSUZUKA, Akihiro, Toyota-shi, 471-8571 (JP)
(74) Representative: J A Kemp LLP

(57) **Abstract**

A display control device including a display control section that displays a meter image indicating information of a vehicle on a display section provided to the vehicle and that also, in the meter image from a reference point to a position of an indicator needle along a scale configuration of a meter, displays a gauge depicted along the scale configuration of the meter so as to match movement of the indicator needle and depicts the gauge side with reference to the indicator needle by a prescribed emphasis display.

## Description

### Technical Field

The present disclosure relates to a display control device.

### Related Art

Technology related to a display device that improves the visibility of an electronic display meter is disclosed in Japanese Patent Application Laid-Open (JP-A) No. 2017-146167 (Patent Document 1).

However, hitherto in the display of a meter by image generation, an improvement in visibility is achieved by depicting an indicator needle and a periphery of an indicator needle as a region of higher brightness than that of a background. For example, visibility is improved by generating an image such that white light is radiated toward a leading end of an indicator needle. However, although such image generation results in a depiction such that relatively the periphery of the indicator needle is colored, this is merely controlling the periphery of the indicator needle. This means that there is room for improvement from the perspective of a user intuitively ascertaining a value indicated by the indicator needle at the point in time that the indicator needle is viewed.

### SUMMARY

An object of the present disclosure is to provide a display control device capable of improving visibility in relation to display of a meter by controlling emphasis display.

A display control device according to a first aspect includes a display control section. The display control section displays a meter image indicating information of a vehicle on a display section provided at a vehicle front side of a driver's seat of the vehicle and that also, in the meter image from a reference point to a position of an indicator needle along a scale configuration of a meter, displays a gauge depicted along the scale configuration of the meter so as to match movement of the indicator needle and depicts the gauge side with reference to the indicator needle by a prescribed emphasis display.

In the display control device according to the first aspect, the gauge extends and contracts, and depiction of emphasis display is performed with reference to the gauge. A value indicated by the indicator needle at the current point in time can thereby be readily ascertained by a user.

A display control device according to a second aspect is the first aspect, wherein the display control section performs depiction of the emphasis display such that a side near to the indicator needle is emphasized more than a side near to the reference point. The second aspect enables the visibility of a value indicated by the indicator needle at the current point in time to be improved.

A display control device according to a third aspect is the first aspect or the second aspect, wherein the display control section takes a region near to the reference point as a region to depict with suppressed display at the gauge side. The third aspect enables an uncanny feeling of a user to be reduced by suppressed display without emphasizing near to the reference point.

A display control device according to a fourth aspect is any one of the first to the third aspects, wherein the display control section segments the meter into plural regions, and changes a depiction mode of the emphasis display according to a region the gauge falls in. The fourth aspect enables a user to easily ascertain which region the indicator needle is indicating at the current point in time.

A display control device according to the fifth aspect is the fourth aspect, wherein the display control section changes the depiction mode of the indicator needle for cases in which the indicator needle has fallen in a specific region. The fifth aspect changes the depiction of the indicator needle, and thereby enables the design characteristics to be improved, and enables changes to the region the indicator needle falls in to be easily noticed.

A display control device according to a sixth aspect is the fourth aspect, wherein the display control section displays text information with emphasis as required on the meter for cases in which the indicator needle has fallen in the specific region. The sixth aspect enables text information for which emphasis is particularly desired in a region to be easily conveyed to a user.

A display control device according to a seventh aspect is the fourth aspect, wherein the display control section depicts the gauge side with a gradation, and displays the gradation by a different depiction mode according to the region that the gauge falls in. The seventh aspect makes segmentation of regions explicit to a user, enabling the visibility to a user to be improved.

As described above, in the display control device according to the present disclosure, the visibility related to display of a meter can be improved by control of emphasis display.

### BRIEF DESCRIPTION OF DRAWINGS

Exemplary embodiments of the present disclosure will be described in detail based on the following figures, wherein:
Fig. 1 is a block diagram illustrating a hardware configuration of a vehicle;
Fig. 2 is a diagram to explain a meter image;
Fig. 3 is a diagram illustrating an example of depictions of a meter image; and
Fig. 4 is a flowchart illustrating a flow of specific processing.

### DETAILED DESCRIPTION

Description follows regarding a vehicle 10 according to an exemplary embodiment.

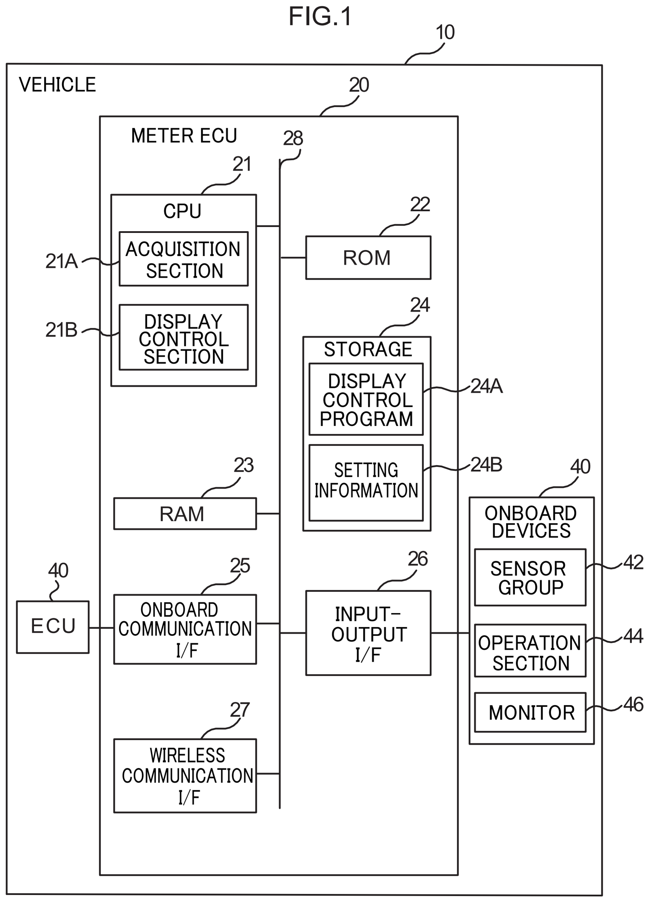

Fig. 1 is a block diagram illustrating a hardware configuration of the vehicle 10. As illustrated in Fig. 1, the vehicle 10 includes a meter electronic control unit (ECU) 20. The vehicle 10 is an example of a "vehicle" of the present disclosure, and the meter ECU 20 is an example of a "display control device" of the present disclosure.

The meter ECU 20 is configured including a central processing unit (CPU) 21, read only memory (ROM) 22, random access memory (RAM) 23, storage 24, an onboard communication interface (I/F) 25, an input-output I/F 26, and a wireless communication I/F 27. The CPU 21, the ROM 22, the RAM 23, the storage 24, the onboard communication I/F 25, the input-output I/F 26, and the wireless communication I/F 27 are connected together through an internal bus 28 so as to be capable of communicating with each other.

The CPU 21 is a central processing unit that executes various programs and controls each section. Namely, the CPU 21 reads a program from the ROM 22 or the storage 24, and executes the program using the RAM 23 as a work area. The CPU 21 controls each of the above configuration and performs various computational processing according to the program recorded on the ROM 22 or the storage 24.

The ROM 22 stores various programs and various data. The RAM 23 is employed as a work area to temporarily store programs or data.

The storage 24 is configured by a storage device such as an embedded MultiMediaCard (eMMC), a Universal Flash Storage (UFS), or the like, and is stored with various programs and various data. A display control program 24A and setting information 24B are stored on the storage 24. The display control program 24A is a program to cause specific processing, described later, to be executed in the CPU 21. The setting information 24B is, for example, stored with plural segments of regions of a meter and modes of emphasis display according to segment, and is stored with timings of highlight display and the like.

The onboard communication I/F 25 is an interface for connecting to another ECU 30. A communicating standard by CAN protocol is performed in this interface. The onboard communication I/F 25 is connected to an external bus 29. Note that, although omitted in the drawings, there are plural ECUs other than the ECU 30 provided for respective functions of the vehicle 10.

The input-output I/F 26 is an interface for communicating with onboard devices 40 installed to the vehicle 10.

The onboard devices 40 are various devices installed to the vehicle 10. The vehicle 10 includes, as examples of the onboard devices 40, a sensor group 42, an operation section 44, and a monitor 46.

The sensor group 42, for example, includes sensors to detect a state of the vehicle 10 and the surrounding condition of the vehicle 10, such as a 3D-LiDAR sensor, a miliwave sensor, an infrared sensor, a turn indicator sensor, an axel position sensor, a shift sensor, a vehicle speed sensor, a steering angle sensor, an angular velocity sensor, a global positioning system (GPS) sensor, a lighting sensor, a gyro sensor, a steering angle sensor, an acceleration sensor, and the like, and includes plural cameras and the like for imaging the surroundings of the vehicle 10. The sensor group 42 outputs detection results of each of the sensors and captured images of each of the cameras to the meter ECU 20, the ECU 30, and the like.

The operation section 44 includes various switches, levers, and the like to receive operations by a driver of the vehicle 10. The operation section 44 is, for example, configured including an ignition switch, a shift lever, padel shifts, and the like. The operation section 44 outputs an operation content of the various switches, levers, and the like to the meter ECU 20, the ECU 30, and the like. Note that a user referred to below is an occupant including a driver who is able to see the meter image 50 of the vehicle 10.

The monitor 46 is provided to a meter panel arranged in front of a driver's seat of the vehicle 10, and is a meter display for displaying proposals of operations according to functions of the vehicle 10, and images and the like related to explaining these functions. The monitor 46 is an example of a "display section" of the present disclosure.

The wireless communication I/F 27 is a wireless communication module for communicating with external devices. A communication standard such as, for example, 5G, LTE, Wi-Fi (registered trademark), Bluetooth (registered trademark), or the like is employed in the wireless communication module.

The CPU 21 of the meter ECU 20 includes, as functional configuration, an acquisition section 21A and a control section 21B. Each of these functional configurations is realized by the CPU 21 reading out and executing the display control program 24A stored on the storage 24. The control section 21B is an example of a "control section" of the present disclosure.

The acquisition section 21A acquires various information. For example, the acquisition section 21A acquires detection information detectable by the vehicle 10 as the various information. The detection information includes detection results from each of the sensors configuring the sensor group 42, and captured images and the like of each of the cameras. Moreover, as the various information, the acquisition section 21A acquires vehicle information, and outputs this to the display control section 21B for outputting on the meter image 50. Description follows regarding an example in the present exemplary embodiment of a case in which torque is the vehicle information. Note that the present exemplary embodiment is not limited to torque as the vehicle information, and vehicle speed, engine revs, injection pressure, water temperature, oil temperature, oil pressure, voltage, and the like are applicable for various display.

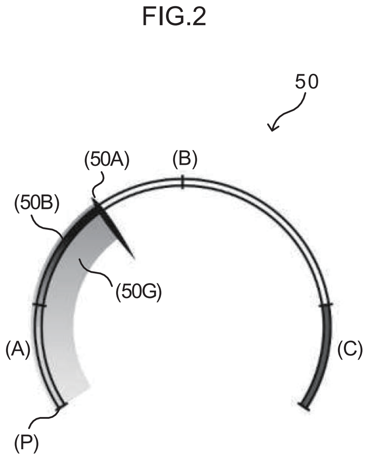

The display control section 21B performs display control related to display of the monitor 46. For example, as illustrated in Fig. 2, the control section 21B displays 250 on the monitor 46. The meter image 50 displays an indicator needle (50A) and a gauge (50B) along a scale configuration of the meter as a circular arc shape indicating a numerical value of the torque of the vehicle 10. Note that for ease of explanation, the meter image 50 of Fig. 2 is an image with reversed color. The indicator needle (50A), together with the gauge (50B), move from a zero reference point (P) on the meter according to the numerical value of the torque. The gauge (50B) is depicted so as to extend and contract along the scale configuration of the meter to match movement of the indicator needle (50A) from the reference point (P) to the position of the indicator needle (50A). Moreover, a gauge side with reference to the indicator needle (50A) is depicted by a gradation (50G). The meter is segmented into plural regions. Fig. 2 illustrates segmentation into regions of a region (A) near to the reference point (P), an intermediate region (B) of the meter, and a region (C) near to a maximum value of the meter.

In the display control section 21B, depiction of emphasis display is performed so as to emphasize a side near to the indicator needle (50A) more than a side near to the reference point (P). In the example of Fig. 2, positions near to the indicator needle (50A) are depicted so as to be a dark gradation, and positions near to the reference point are depicted so as to be a light gradation. Moreover, the emphasis display may be one in which the display mode is changed so as to impart a difference in brightness, or so as to impart a difference in contrast. The visibility to a user can be improved by performing emphasis display of the side near to the indicator needle more than the side near to the reference point in this manner. Moreover, the display control section 21B may make a region near to the reference point (P) a region where emphasis display of the gauge side is not depicted, namely may make the gauge side a region of suppressed display. In such cases, an uncanny feeling of a user can be reduced by performing the suppressed display without emphasis when near to the reference point.

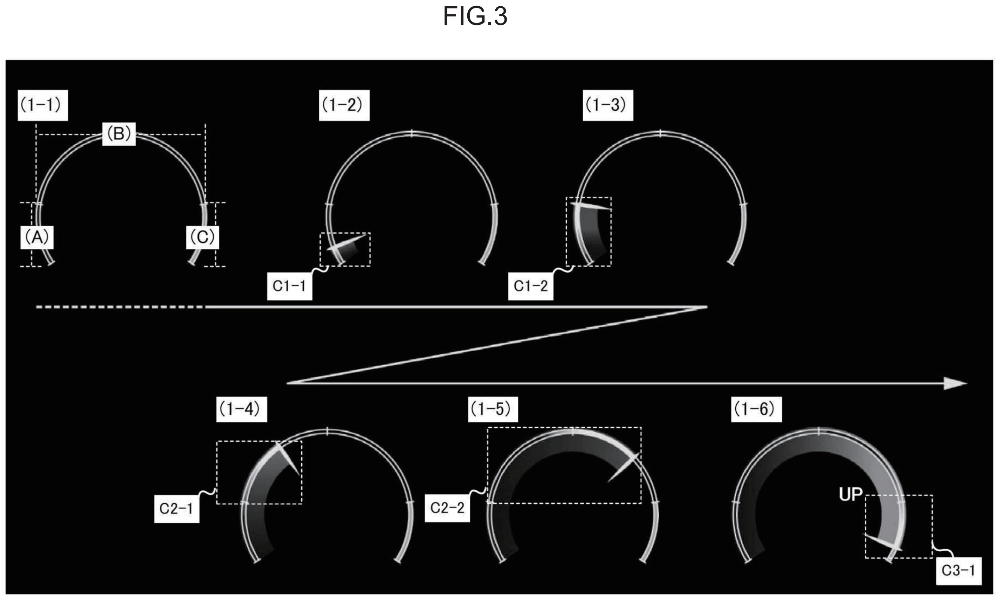

Fig. 3 is a diagram illustrating an example of depictions of a meter image. Fig. 3 illustrates a case of a transition from a no revs state at (1-1) to a maximum torque value at (1-6). (1-1) illustrates a range segmented into the region (A), the region(B), and the region (C) as described above. (1-2) is employed when there is low torque. At this time, the hue of the gauge (50B), the indicator needle (50A), and the gradation (50G) is depicted as a "blue" hue in the range encompassed by box (C1-1). (1-3) is a state in which the gauge (50B) has progressed from the region (A) as far as a boundary point to region (B). The range encompassed by box (C1-2) has a depiction mode changed such that the "blue" hue of the gauge (50B), the indicator needle (50A), and the gradation (50G) becomes feinter and is darker. Similarly when the gauge (50B) has progressed according to a subsequent rise in torque, the depiction mode (omitted in the drawings) is changed such that while the "blue" of the range encompassed by box (C1-2) is maintained, the hue becomes feinter and is darker. This thereby enables a clash of hues to be reduced, and enables focus to be placed on the progressing indicator needle (50A) at the current point in time.

(1-4) and (1-5) are states in which the gauge (50B) has progressed as far as the region (B). The ranges encompassed by boxes (C2-1) and (C2-2) are intermediate regions in which the hue of the gauge (50B), the indicator needle (50A), and the gradation (50G) is depicted as a "yellow" hue. A gradation of "yellow" is employed between region (A) and region (B). On transitioning from (1-4) to (1-5), the depiction mode is changed such that, in the range encompassed by box (C2-2), the "yellow" hue of the gauge (50B), the indicator needle (50A), and the gradation (50G) emphasizes the side near to the indicator needle (50A) more than the side near to the reference point (P).

Moreover, when the indicator needle (50A) has moved to a different region, the indicator needle (50A) may be temporarily highlight displayed, such as by illuminating or flashing, so as to explicitly make a user aware that the region the indicator needle (50A) falls in has shifted. This thereby enables a user to more easily ascertain the shift in region.

(1-6) is a state progressed to high torque near to the maximum value. In the range encompassed by box (C3-1), as the final region, the hue of the gauge (50B), the indicator needle (50A), and the gradation (50G) is depicted in a "red" hue. When this performed, text information "UP" is highlight displayed to accompany the meter in order to indicate that a threshold value of the region (C) has been exceeded. In the display control section 21B, controlling display so as to change the depiction mode as described above results in being able to make a driver aware of and indicate with emphasis a timing for switching gear. Moreover, changing the depiction mode by segmented regions enables a user to readily ascertain which region is indicated by the indicator needle at the current point in time. Moreover, due to the gradation according to region, the segmentation of regions is made explicit to the user, enabling the visibility to a user to be improved. Moreover, changing the depiction of the indicator needle enables the design characteristics to be improved, and also enables a change in the region that the indicator needle falls in to be readily noticed. Moreover, for the text information, text information for which emphasis is particularly desired in the region can be readily conveyed to the user.

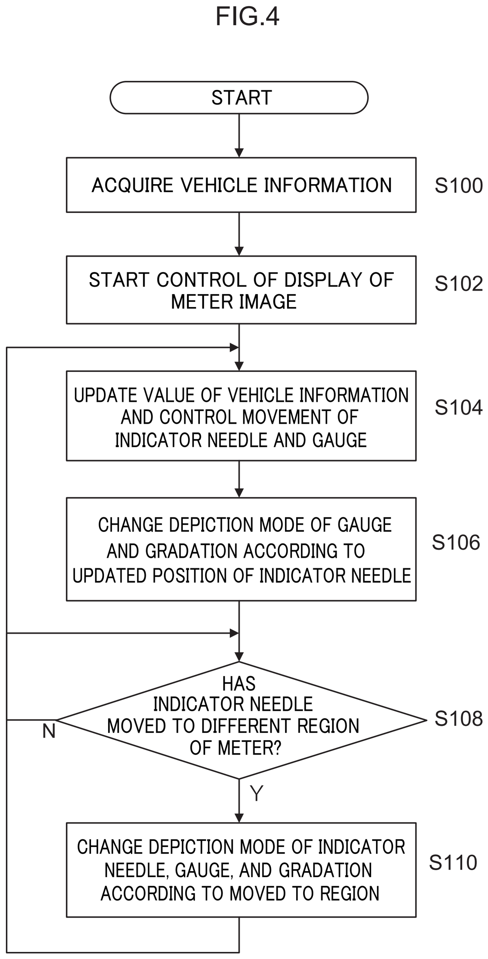

Fig. 4 is a flowchart illustrating a flow of specific processing executed by the meter ECU 20. The CPU 21 reads the display control program 24A from the storage 24, and performs the specific processing by expanding and executing the display control program 24A in the RAM 23. As an example, the specific processing is performed by automatically being repeated each time a fixed period of time has elapsed.

At step S100, the CPU 21 acquires vehicle information detectable by the vehicle 10. Note that the vehicle information is acquired and updated as required, and is referenced in subsequent processing steps.

At step S102, the CPU 21 starts control of display of the meter image 50 according to the acquired vehicle information.

At step S104, the CPU 21 updates values of the vehicle information, and controls movement of the indicator needle and gauge according to the updated values of the vehicle information.

At step S106, the CPU 21 changes a depiction mode of the gauge (50B) and the gradation (50G) according to an updated position of the indicator needle (50A).

At step S108, the CPU 21 determines whether or not the indicator needle (50A) has moved to a different region. Processing transitions to step S106 when determined that the indicator needle (50A) has moved, but the present step is repeated in cases in which determination is that the indicator needle (50A) has not moved.

At step S110, the CPU 21 changes a depiction mode of the indicator needle (50A), the gauge (50B), and the gradation (50G) according to the moved to region. Processing returns to step S104 after the present step, and processing is repeated until meter display is ended.

Due to adopting the above configuration, the meter ECU 20 enables the discernability of the meter to be improved by controlling the emphasis display. Moreover, the gauge side is emphasized more than the indicator needle, and the maximum value side is not emphasized more than the indicator needle, with this enabling the position of the indicator needle at the current point in time to be readily ascertained by the user.

### Other

Although detailed explanation has been given above regarding exemplary embodiments of the present disclosure, with reference to the appended drawings, the technical scope of the present disclosure is not limited by such examples. It will be apparent to a person of ordinary skill in the art of the present disclosure that various modifications and improvements can be arrived at within the scope of the technical idea as recited by the scope of the patent claims, and obviously such modifications and improvements should be understood as belonging to the technical range of the present disclosure.

The advantageous effects described above for the above exemplary embodiments are merely explanatory and indicative, and are not limited to those described in the exemplary embodiments above. Namely, in the technology according to the present disclosure, together with the advantageous effects described in the above exemplary embodiments, or instead of the advantageous effects described in the above exemplary embodiments, other advantageous effects may be exhibited as will be apparent from the above exemplary embodiments to a person of ordinary skill in the art of the present disclosure.

The processing described in the above exemplary embodiments may also be implemented by a dedicated hardware circuit. In such cases, the processing may be executed by a single hardware unit alone, or may be executed by plural hardware units.

In the above exemplary embodiments, the display control program 24A is stored on the storage 24. However, there is no limitation thereto, and the display control program 24A may be stored on the ROM 22.

Although in the above exemplary embodiment an example has been given in which the monitor 46 that is a meter display is a "display section" of the present disclosure, the example of the "display section" is not limited to being a meter display. For example, examples of the "display section" include other displays such as a center display or a head-up display (HUD). Moreover, examples of the "display section" include a combination of plural displays such as a meter display and a center display.

In the above exemplary embodiment the meter ECU 20 executes the specific processing illustrated in Fig. 2. However, there is no limitation thereto, and the specific processing may be executed in cooperation between the meter ECU 20 and another ECU.

Note that the specific processing executed by the CPU 21 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the specific processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the display control program 24A is pre-stored (installed) in the storage 24, there is no limitation thereto. The display control program 24A may be provided in a format recorded on a recording medium such as a compact disk read only memory (CD-ROM), a digital versatile disk read only memory (DVD-ROM), a universal serial bus (USB) memory, or the like. Moreover, the display control program 24A may in a format downloaded from an external device over a network. Note that the technology of the present disclosure is applicable to programs and program products.

## Claims

1. A display control device comprising:
a display control section that displays a meter image indicating information of a vehicle on a display section provided to the vehicle and that also, in the meter image from a reference point to a position of an indicator needle along a scale configuration of a meter, displays a gauge depicted along the scale configuration of the meter so as to match movement of the indicator needle and depicts the gauge side with reference to the indicator needle by a prescribed emphasis display.

2. The display control device of claim 1, wherein the display control section performs depiction of the emphasis display such that a side near to the indicator needle is emphasized more than a side near to the reference point.

3. The display control device of claim 1, wherein the display control section takes a region near to the reference point as a region to depict with suppressed display at the gauge side.

4. The display control device of claim 1, wherein the display control section segments the meter into a plurality of regions, and changes a depiction mode of the emphasis display according to a region the gauge falls in.

5. The display control device of claim 4, wherein the display control section changes the depiction mode of the indicator needle for cases in which the indicator needle has fallen in a specific region.

6. The display control device of claim 4, wherein the display control section displays text information with emphasis as required on the meter for cases in which the indicator needle has fallen in the specific region.

7. The display control device of claim 4, wherein the display control section depicts the gauge side with a gradation, and displays the gradation by a different depiction mode according to the region that the gauge falls in.
